# EUROPEAN PATENT APPLICATION

(11) **EP 1 919 198 A1**
(43) Date of publication of application: **07.05.2008**
(21) Application number: 07109718.2
(22) Date of filing: 06.06.2007
(51) Int. Cl.: H04N 5/232

(54) **Photographing apparatus having external cameras and method of switching modes thereof**

(30) Priority: 06.11.2006 KR 20060109063
(71) Applicant: Samsung Electronics Co., Ltd., Suwon-si, Gyeonggi-Do (KR)
(72) Inventor: Kim, Hyung-dal, Yongin-si, Gyeonggi-do (KR)
(74) Representative: Grünecker, Kinkeldey, Stockmair & Schwanhäusser Anwaltssozietät

(57) **Abstract**

A photographing apparatus having external cameras, and a method of switching modes thereof, are provided. The photographing apparatus includes a photographing part for photographing an optical image being converged through a lens part, and converting the image into an electric signal, a video signal generating part for processing the electric signal being output from the photographing part and generating a video signal, a signal processing port for processing the video signal to a displayable form, a wireless receiver for receiving a video signal being wirelessly transmitted from the first external camera, and transmitting the received signal to the signal processing part, and a wired connecting part connected with a second external camera in a wired manner, and transmitting the video signal to the signal processor. As a result, user can selectively use the wired and wireless external cameras being connected with the camcorder and user convenience is improved.

## Description

### BACKGROUND OF THE INVENTION

### Field of the Invention:

The present invention relates to a photographing apparatus having external cameras, and a method of switching modes thereof. More particularly, the present invention relates to wired and wireless external cameras, a photographing apparatus connected with the external cameras to transmit and receive data, and a method of switching modes thereof.

### Description of the Related Art:

Generally, a small camera having a simple photographing function is connected to a camcorder via a cable. This simple camera is used generally in outdoor activities.

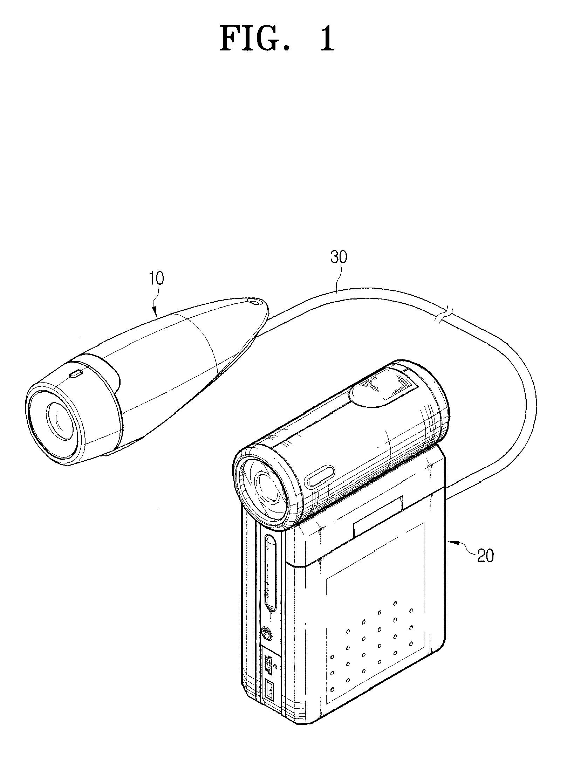

FIG. 1 illustrates a photographing apparatus provided with a conventional external camera.

Referring to FIG. 1, photographing apparatuses such as an external camera 10 and a camcorder 20 transmit and receive data in a wired manner.

The external camera 10 is connected to the camcorder 20 through a cable 30, and transmits captured video and audio signals to the camcorder 20 via the cable 20. A user views the captured video on a liquid crystal display (LCD) of the camcorder 20, and listens to the audio through a speaker of the camcorder 20.

Because the external camera 10 and the camcorder 20 are connected through the cable 30, efficient use of space is not practical. However, it will inconvenience the user if he carries the external camera 10 separately. The user may also feel inconvenience when he coils the cable 30, or there is always the possibility that the cable 30 is inadvertently hooked around the hand or arm of the user, or any other objects near the user, causing the camcorder 20 attached to the cable 30 to fall.

Accordingly, there is a need for a photographing apparatus for transmitting and receiving data to and from an external camera not only by wired communication, but also by wireless communication such that a user can select between a wired external camera and a wireless external camera to use.

### SUMMARY OF THE INVENTION

Exemplary embodiments of the present invention address at least the above problems and/or disadvantages and provide at least the advantages described below. Accordingly, an aspect of exemplary embodiments of the present invention is to provide a photographing apparatus for transmitting and receiving data to and from an external camera not only by wired communication, but also by wireless communication such that a user can select between a wired external camera and a wireless external camera to use.

An aspect of the present invention provides a photographing apparatus, comprising a first external camera having a photographing part for photographing an optical image being converged through a lens part and converting the image into an electric signal and a video signal generating part for processing the electric signal being output from the photographing part and generating a video signal, a signal processing part for processing the video signal to a displayable form, a wireless receiver for receiving a video signal being wirelessly transmitted from the first external camera, and transmitting the received signal to the signal processing part, and a wired connecting part connected with a second external camera in a wired manner, and transmitting the video signal to the signal processor.

The photographing apparatus may further comprise a control part for controlling such that, in a communication with both of the first and the second external cameras, the signal processing part receives the video signal being received from the first external camera and processes the received signal.

The photographing apparatus may further comprise a selecting part for selecting one from an audio signal being received from the first external camera, and an audio signal being received from the second external camera, wherein the control part controls such that the selecting part first selects the audio signal being received from the first external camera.

Another aspect of the present invention provides a photographing apparatus, comprising a main body for receiving a video signal and an audio signal being received from a second external camera in a wired manner and processing the received signals, and a wireless receiver for receiving a video signal and an audio signal being wirelessly received from a first external camera and transmitting the received signal to the main body.

The wireless receiver may comprise a battery part for mounting a battery, a circuit part for stabilizing power being supplied from the battery part and supplying the stabilized power to the main body, and a receiver for receiving a video signal and an audio signal from the first external camera, if power is supplied from the main body.

The wireless receiver may further comprise a power key for turning on the wireless receiver, and if the wireless receiver is turned on according to the power key, power is supplied from the main body.

The wireless receiver may further comprise a second channel switch for being manipulated in the same manner as a first channel switch of the first external camera for operating a transmission channel of the first external camera.

The main body may comprise a wired connecting part to which a cable being connected with the second external camera is connected, a signal processing part for processing the video and audio signals being received via the wired connecting part and the wireless receiver, and a control part for controlling such that the signal processing part processes the video signal and the audio signal being received via the wireless receiver, among the video and the audio signals being received via the wired connecting part and the wireless receiver.

The main body may further comprise a selecting part for selecting one from the audio signals being received via the wired connecting part and the wireless receiver, and the control part may control such that the selecting part selects the audio signal being received via the wireless receiver.

The photographing apparatus may further comprise a photographing part for photographing an optical image being converged through a lens part and converting the video into an electric signal, a video signal generating part for processing the electric signal being output from the photographing part and generating a video signal, and a display part for displaying the video signal being processed at the signal processor.

Yet another aspect of the present invention provides a method of switching a mode of a photographing apparatus, comprising upon power on, operating on one of a photographing mode and a playback mode, determining an interrupt from an external camera, and upon determination of the interrupt, terminating the photographing mode and the playback mode and switching into a reception mode for receiving a video signal from the external camera.

The switching into the reception mode may comprise, upon determination that the interrupt is generated from a wired external camera which is communicating in a wired manner, switching into a wired reception mode for receiving a video signal from the wired external camera.

The switching into the reception mode may comprise, upon determination that the interrupt is generated from a wireless external camera which is communicating wirelessly, switching into a wireless reception mode for receiving a video signal from the wireless external camera.

The switching into the reception mode may comprise, upon determination that the interrupt is generated from both of a wired external camera which is communicating in a wired manner, and a wireless external camera which is communicating wirelessly, switching into a wireless reception mode for receiving a video signal from the wireless external camera.

### BRIEF DESCRIPTION OF THE DRAWINGS

The above and other objects, features, and advantages of certain exemplary embodiments of the present invention will be more apparent from the following description taken in conjunction with the accompanying drawings, in which:

FIG. 1 illustrates a conventional photographing apparatus having an external camera;

FIG. 2 illustrates a photographing apparatus having external cameras according to an exemplary embodiment of the present invention;

FIG. 3 is a block diagram of a first external camera according to an exemplary embodiment of the present invention;

FIG. 4 is a block diagram of a second external camera according to an exemplary embodiment of the present invention;

FIG. 5 is a block diagram of a photographing apparatus according to an exemplary embodiment of the present invention;

FIG. 6 is a flowchart illustrating a method of switching modes of a photographing apparatus according to an exemplary embodiment of the present invention;

FIG. 7 is an exploded perspective view of a first external camera according to an exemplary embodiment of the present invention; and

FIG. 8 is an exploded perspective view of a wireless receiver of a photographing apparatus according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

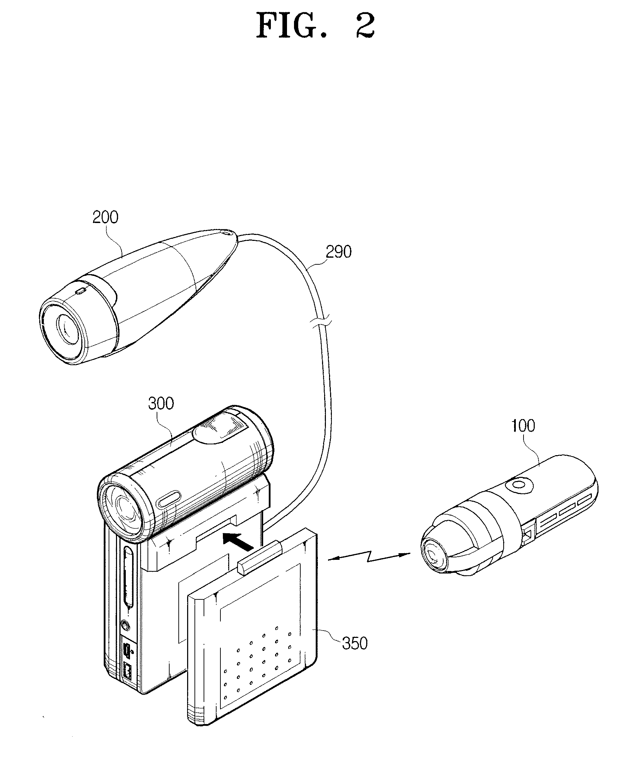

FIG. 2 illustrates a photographing apparatus having external cameras according to an exemplary embodiment of the present invention.

Referring to FIG. 2, a camcorder will be explained as a photographing apparatus. The camcorder includes a camcorder body 300, and a wireless receiver 350 mounted to the camcorder body 300.

The camcorder body 300 operates as a general photographing device, that is, the camcorder body 300 operates to capture video and audio data. The camcorder body 300 also operates as a playback device and a recording device of the captured video and audio signals. A cable 290, connected with the second external camera 200, is attached to the camcorder body 300, and accordingly, the camcorder body 300 transmits and receives signal to and from the second external camera 200.

The wireless receiver 350 is mounted to the camcorder body 300 and operates as a battery to supply power to the camcorder body 300, and also operates as a receiver to receive a wireless signal being transmitted from the first external camera 100 and transmit the received signal to the camcorder body 300.

The first external camera 100 captures video and audio, generates video and audio signals, modulates the generated video and audio signals and transmits the modulated signals to the wireless receiver 350.

The second external camera 200 also operates to capture video and audio, generate video and audio signals, and transmits the generated video and audio signals to the camcorder body 300 through the cable 290.

The camcorder body 300 plays back and records the video and audio signals being received from the first and second external cameras 100, 200, and when communicating with both of the first and second external cameras 100, 200, selects, records or plays back the video and audio signals being received from the first external camera 100.

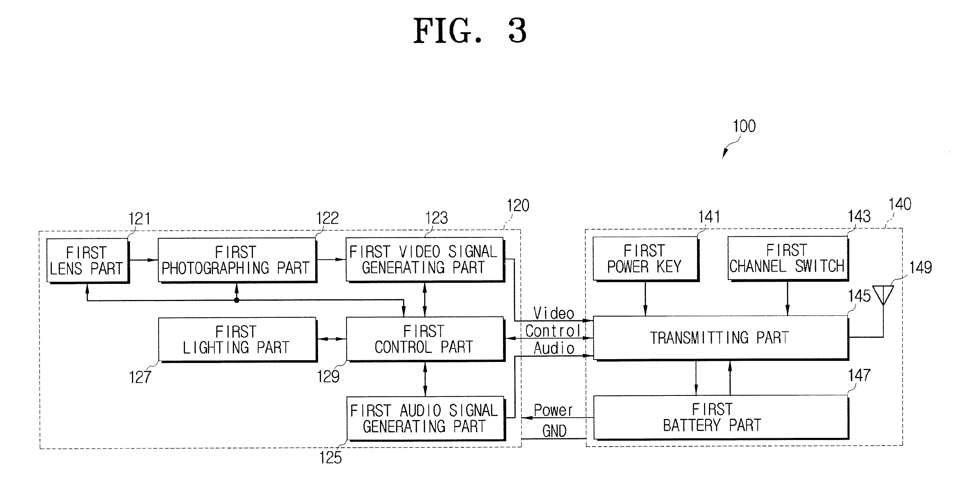

FIG. 3 is a block diagram of the first external camera 100 according to an exemplary embodiment of the present invention.

Referring to FIG. 3, the first external camera 100 includes a camera part 120 and a wireless transmitting part 140, which are connected with each other through 5-pin connector, and structured in an integral configuration as shown in FIG. 2.

The camera part 120 performs photographing and recording, and includes a first lens part 121, a first photographing part 122, a first video signal generating part 123, a first audio signal generating part 125, a first lighting part 127 and a first control part 129.

The first lens part 121 causes an externally input light to be deflected and converged as an optical image corresponding to the object being photographed.

The first photographing part 122 may include a sensors such as Complementary metal Oxide Semiconductor (CMOS) or Charge-Coupled Device (CCD), and the first photographing part 122 photographs the converged optical image of the first lens part 121 and converts the image into electric signal.

The first video signal generating part 123 removes noise from the electric signal being output from the first photographing part 122, adjusts the gain to maintain the level of signal, and generates a video signal.

The first audio signal generating part 125 converts the external audio being input through a microphone (not shown) into an electric signal to generate an audio signal.

The first lighting part 127 may include a Light Emitting Diode (LED) which is turned on during the operation of the camera part 120.

The first control part 129, in response to a control signal being transmitted from the wireless transmitting part 140, controls the first lens part 121, the first photographing part 122 and the first video signal generating part 123 to generate a video signal, and controls the first audio signal generating part 125 to generate an audio signal. The first control part 129 also controls the first lighting part 127 such that the LED is turned on while power is supplied from the wireless transmitting part 140 and the camera part 120 operates.

The wireless transmitting part 140 wirelessly transmits the video and audio signals being generated at the camera part 120, and includes a first power key 141, a first channel switch 143, a transmitting part 145, a first battery part 147 and a first antenna 149.

The first power key 141 may be turned on by slowly pushing once, and turned off by slowly pushing twice.

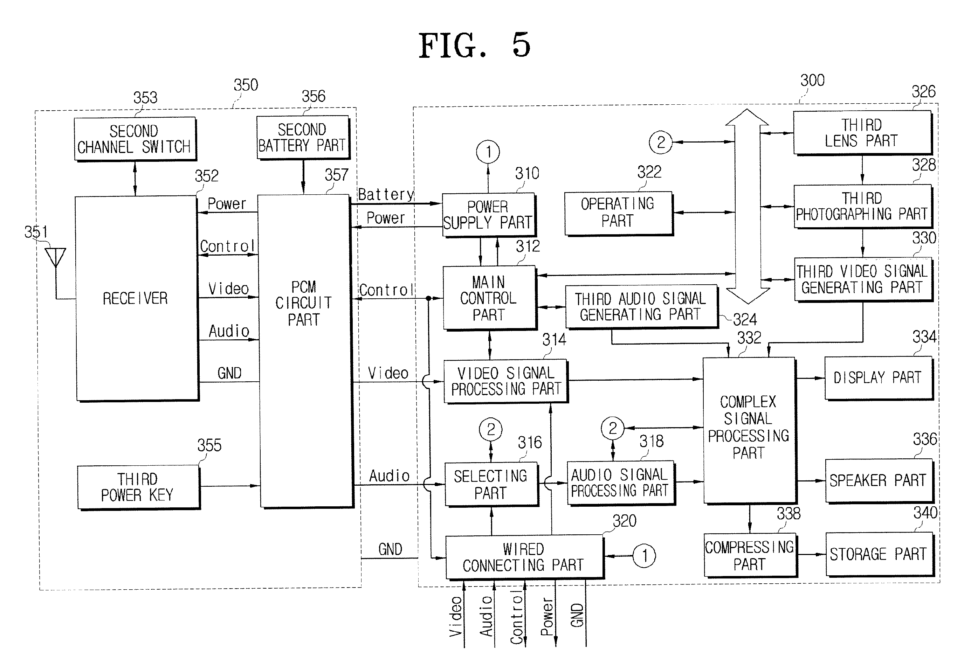

The first channel switch 143 may include two slide type switches, and selects four transmission channels using the two switches. That is, a transmission channel for the transmitting part 145 is selected by sliding the two switches up and down, or left and right. The wireless communication between the first external camera 100 and the camcorder 300, 350 is enabled only when the first channel switch 143 is manipulated in the same manner as the second channel switch 353 of the wireless receiver 350 which will be explained below with reference to FIG. 5.

The transmitting part 145 modulates the video and audio signals being generated at the camera part 120, and transmits the modulated signals to the camcorder 300, 350 via the first antenna 149. The transmitting part 145 transmits the video and audio signals through the transmission channel which is selected according to the manipulation on the first channel switch 143. Furthermore, in response to ON-command being received according to manipulation of the first power key 141, the transmitting part 145 transmits a power supply command to the first battery part 147.

The first battery part 147 may include AA-battery mounted thereto, and upon receiving a power supply command from the transmitting part 145, supplies power to the transmitting part 145 and the camera part 120.

As explained above, the camera part 120 and the wireless transmitting part 140 are connected with each other through the 5-pin connector which includes a video line, an audio line, a control line, a power supply line, and a ground (GND) line, to form the first external camera 100.

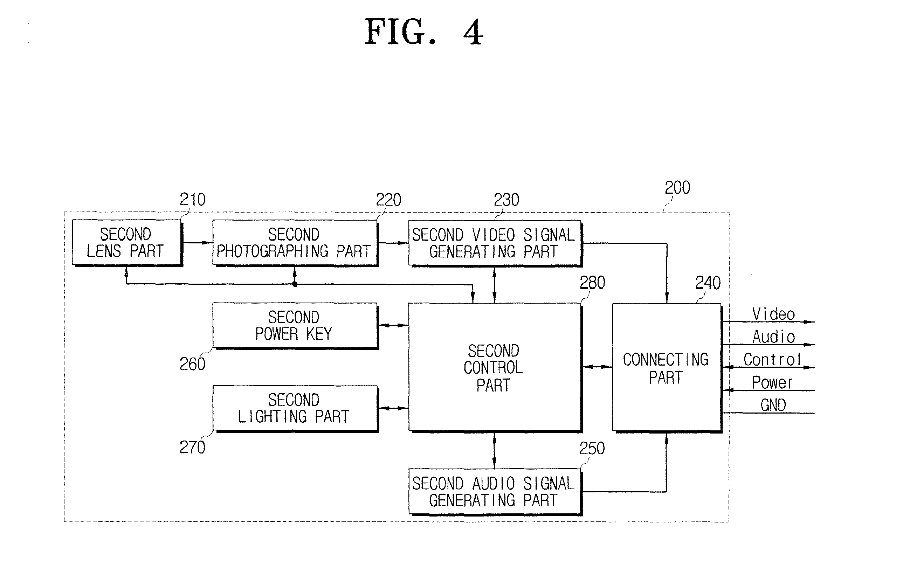

FIG. 4 is a block diagram of the second external camera according to an exemplary embodiment of the present invention.

Referring to FIG. 4, the second external camera 200 includes a second lens part 210, a second photographing part 220, a second video signal generating part 230, a connecting part 240, a second audio signal generating part 250, a second power key 260, a second lighting part 270 and a second control part 280.

The second lens part 210 causes an externally input light to be deflected and converted in the form of an optical image corresponding to an object being photographed.

The second photographing part 220 may include a sensor such as CMOS or CCD, and photographs the optical image being converged at the second lens part 210 and converts the image into electric signal.

The second video signal generating part 230 removes noise from the electric signal being output from the second photographing part 220, adjusts gains to maintain a predetermined signal level, and generates a video signal.

The second audio signal generating part 250 converts the audio being input through a microphone (not shown) into electric signal to generate an audio signal.

The second power key 260 is turned on by slowly pushing once, and turned off by slowing pushing twice. Additionally, the second power key 260 causes the photographing to start when briefly pushed once, and causes the photographing to stop when briefly pushed twice. The second power key 260 may be configured as a wired remote controller connected with the cable 290 which connects the second external camera 200 and the camcorder body 300.

The second lighting part 270 may be configured as a LCD which emits blue light when the power is turned on, and emits red light when photographing is performed.

The connecting part 240 is connected with the cable 290, such that the video and audio signals being generated at the second external camera 200 are transmitted to the camcorder body 300 through the video line and audio line of the cable 290. Additionally, power is supplied from the camcorder body 300 through the power supply line. A control signal is transmitted through the control line of the cable 290, and the ground of the second external camera 200 is connected with the ground of the camcorder body 300 through the ground line.

The second control part 280, in response to a control signal being transmitted through the connecting part 240, controls the second lens part 210, the second photographing part 220 and the second video signal generating part 230 to generate a video signal, and controls the second audio signal generating part 250 to generate an audio signal. The second control part 280 also controls the second lighting part 270 such that the LED emits blue light when the power is supplied through the connecting part 240, and emits red light when photographing is performed.

FIG. 5 is a block diagram of a photographing apparatus according to an exemplary embodiment of the present invention.

Referring to FIG. 5, the photographing apparatus includes a camcorder body 300, and a wireless receiver 350 which supplies power to the camcorder body 300.

The wireless receiver 350 may include a second antenna 351, a receiving part 352, a second channel switch 353, a third power key 355, a second battery part 356 and a Protection Circuit Module (PCM) circuit part 357.

The third power key 355 may include a slide type key, which is slid up and down, or left and right to cause the wireless receiver 350 to turn on or off.

The second battery part 356 supplies power to the camcorder body 300, when the wireless receiver 350 is mounted to the camcorder body 300, irrespective of on or off status of the third power key 355. That is, the second battery part 356 supplies power to the camcorder body 300 when the wireless receiver 350 is mounted to the camcorder body 300, even when the third power key 355 is in off status. By doing so, the third power key 355 is controlled not to be turned on when the wireless receiver 350 is removed from the camcorder body 300. As a result, discharge of the second battery part 356 can be prevented.

The second battery part 356 preferably uses a lithium polymer rechargeable battery.

The PCM circuit part 357 may include a printed circuit board (PCB) to stabilize the battery power being supplied from the second battery part 356, such that the PCM circuit part 357 stabilizes the battery power being supplied from the second battery part 356 when the wireless receiver 350 is mounted to the camcorder body 300, and transmits the stabilized power to the camcorder body 300.

Furthermore, the PCM circuit part 357 is connected with the receiver 352 through five lines including a power line, a control line, a video line, an audio line and a ground line, and connected with the camcorder body 300 through a 5-pin connector including a power line, a control line, a video line, an audio line and a ground line. The PCM circuit part 357 transmits the power being received from the camcorder body 300 to the receiver 352 through the power supply line, and transmits video and audio signals being received at the receiver 352 to the camcorder body 300 through the video line and the audio line. The PCM circuit part 357 transmits and receives a control signal through the control line, and connects the grounds of the wireless receiver 350 with the camcorder body 300 through the ground line.

The second channel switch 353 may include two slide type switches, which are in the same configuration as the first channel switch 143 of the first external camera 100, and manipulated in the same manner as in the first channel switch 143, to select the same transmission channel as that of the wireless transmitting part 140. Because the first external camera 100 and the wireless receiver 350 share the same transmission channel, communication is enabled between the first external camera 100 and the wireless receiver 350.

The receiver 352 detects the modulated signal being received from the first external camera 100 via the second antenna 351, and demodulates the signal into original video and audio signals. The demodulated signals are then transmitted to the camcorder body 300 via the PCM circuit part 357.

The PCM circuit part 357, in response to an ON command to turn on the wireless receiver 350 being received through the third power key 355, transmits the received ON command to the camcorder body 300 through the control line, and accordingly, power is supplied to the PCM circuit part 357 from the camcorder body 300 through the power supply line. The power being supplied to the PCM circuit part 357 is then transmitted to the receiver 352 through the power supply line, and the receiver 352 transmits a HIGH signal, indicating high voltage level, to the camcorder body 300 through the control line.

While the HIGH signal is being transmitted, the camcorder body 300 operates in a wireless reception mode, such that the camcorder body 300 receives a signal from the first external camera 100. If no signal is transmitted from the first external camera 100, the camcorder body 300 displays a message that no signal is being received. In other words, if the wireless receiver 350 is on, the camcorder body 300 operates in a wireless reception mode, regardless of whether or not a signal is being received from the first external camera 100.

The structure of the camcorder body 300 will now be explained below. The camcorder body 300 includes a power supply part 310, a main control part 312, a video signal processing part 314, a selecting part 316, an audio signal processing part 318, a wired connecting part 320, an operating part 322, a third audio signal generating part 324, a third lens part 326, a third photographing part 328, a third video signal generating part 330, a complex signal processing part 332, a display part 334, a speaker part 336, a compressing part 338 and a storage part 340.

The third lens part 326 causes an externally input light to be deflected and converged in the form of an optical image corresponding to an object being photographed.

The third photographing part 328 may include a sensor such as CMOS or CCD, and operates to photograph the optical image converged at the third lens part 326 and convert the image into an electric signal.

The third video signal generating part 330 removes noise from the electric signal being output from the third photographing part 328, adjusts gains to maintain a predetermined level of signal, and generates a video signal.

The third audio signal generating part 324 converts an external audio being input through a microphone (not shown) into an electric signal to generate an audio signal.

The complex signal processing part 332 processes the video signal being generated at the third video signal generating part 330 and the audio signal being generated at the third audio signal generating part 324. The processed video signal of the complex signal processing part 332 is displayed on the display part 334 as a video, while the processed audio signal of the complex signal processing part 332 is output as an audio through the speaker part 336. The processed video signal of the complex signal processing part 332 is compressed in the format such as Joint Photographic Expert Group (JPEG) and Moving Picture Expert Group (MPEG), and the audio signal is compressed in the format such as G.726 and PCM format. The compressed signals are then stored in the storage part 340.

The operating part 322 may include a plurality of operating keys through which a user can input commands. Accordingly, the user may manipulate the operating part 322 to perform operations such as photographing, playback and storing.

The power supply part 310, upon mounting of the wireless receiver 350 to the camcorder body 300, may receive a power supply from the second battery part 356 being stabilized at the PCM circuit part 357, or receive external AC power through an Alternating Current (AC) adapter jack (not shown) provided at the camcorder body 300. The power supply part 310 converts AC to DC, and supplies power to the necessary parts of the camcorder body 300. The power of the power supply part 310 may be supplied to the wireless receiver 350, and to the second external camera 200 being connected with the wired connecting part 320.

The cable 290, being connected with the second external camera 200, is connected with the wired connecting part 320 such that the wired connecting part 320 receives video and audio signals from the second external camera 200. The power of the power supply part 310 is also provided to the second external camera 200, through the cable 290 being connected with the wired connecting part 320. Through the cable 290, the camcorder body 300 transmits and receives a control signal to and from the second external camera 200, and the ground of the second external camera 200 is connected with the ground of the camcorder body 300.

The main control part 312 controls the operation of the respective parts of the camcorder body 300, according to a user command being input through the operating part 322. That is, in response to ON command being input through the operating part 322, the main control part 312 controls the power supply part 310 to supply power to the respective parts of the camcorder body 300 and the wireless receiver 350. The main control part 312 may control the third lens part 326, the third photographing part 328, the third video signal generating part 330 and the third audio signal generating part 324, such that the camcorder body 300 operates on a photographing mode.

Alternatively, the main control part 312 controls the complex signal processing part 332, the display part 334 and the speaker part 336 such that the camcorder body 300 operates on a playback mode, or controls the compressing part 338 and the storage part 340 such that the camcorder body 300 operates on a storage mode.

When the second external camera 200 being connected with the camcorder body 300 through the wired connecting part 320 is turned on, the main control part 312 controls such that the camcorder body 300 operates on a wired reception mode. That is, the main control part 312 detects whether the second external camera 200 is turned on or off, through the control line, and controls the video signal processing part 314 to receive video signal being transmitted from the second external camera 200 and process the received signal. The main control part 312 also controls the selecting part 316 to select the audio signal being transmitted from the second external camera 200 such that the selected audio signal is processed at the audio signal processing part 318.

Meanwhile, when the wireless receiver 350 is turned on according to the manipulation on the third power key 355, the main control part 312 controls such that the camcorder body 300 operates on a wireless reception mode. That is, the main control part 312 controls the camcorder body 300 to operate on a wireless reception mode, if a HIGH signal is received from the receiver 351 through the control line.

The main control part 312 controls such that, regardless of whether the second external camera 200 is turned on or off, the camcorder body 300 operates on a wireless reception mode if the wireless receiver 350 is turned on. That is, the main control part 312 considers the first external camera 100 first, such that the video signal processing part 314 processes the video signal being transmitted from the first external camera 100, the selecting part 316 selects the audio signal being transmitted from the first external camera 100, and the audio signal processing part 318 processes the selected audio signal.

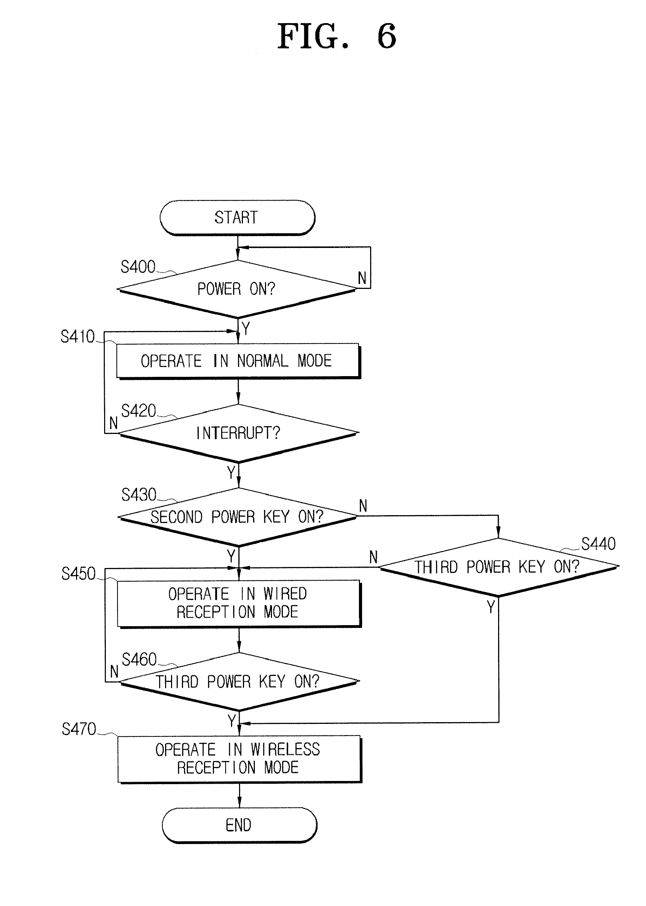

FIG. 6 is a flowchart of a method of switching modes of a photographing apparatus according to an exemplary embodiment of the present invention.

Referring to FIG. 6, a user manipulates the operating part 322 to turn on the camcorder body 300 (S400), and the camcorder body 300 accordingly operates in a normal mode (S410). That is, the main control part 312 controls the third lens part 326, the third photographing part 328, the third video signal generating part 330 and the third audio signal generating part 324 according to user manipulation, such that the camcorder body 300 operates on a photographing mode, or controls the complex signal processing part 332, the display part 334 and the speaker part 336 such that the camcorder body 300 operates in a playback mode, or controls the compressing part 338 and the storage part 340 such that the camcorder body 300 operates in a storage mode.

The main control part 312 determines whether an interrupt has occurred (S420). That is, the main control part 312 determines whether a control signal is received from the wireless receiver 350 and/or the second external camera 200 through the control line, generating an interrupt.

If the interrupt is generated due to the second external camera 200 as the second power key 260 is turned on (S430), the main control part 312 controls such that the camcorder body 300 operates on a wired reception mode (S450). If the second power key 260 is in off state, and the third power key is turned on (S440), the main control part 312 controls such that camcorder body 300 operates on a wireless reception mode (S470).

While the second power key 260 is turned on and the camcorder body 300 is accordingly operating on a wired reception mode (S430), if the third power key 355 is turned on (S460), the main control part 312 may control such that the camcorder body 300 operates in a wireless reception mode (S470). In other words, the main control part 312 controls such that, regardless of whether the second external camera 200 is turned on or off, the camcorder body 300 operates in a wireless reception mode if the wireless receiver 350 is turned on.

Accordingly, the operating mode of the photographing apparatus is switched.

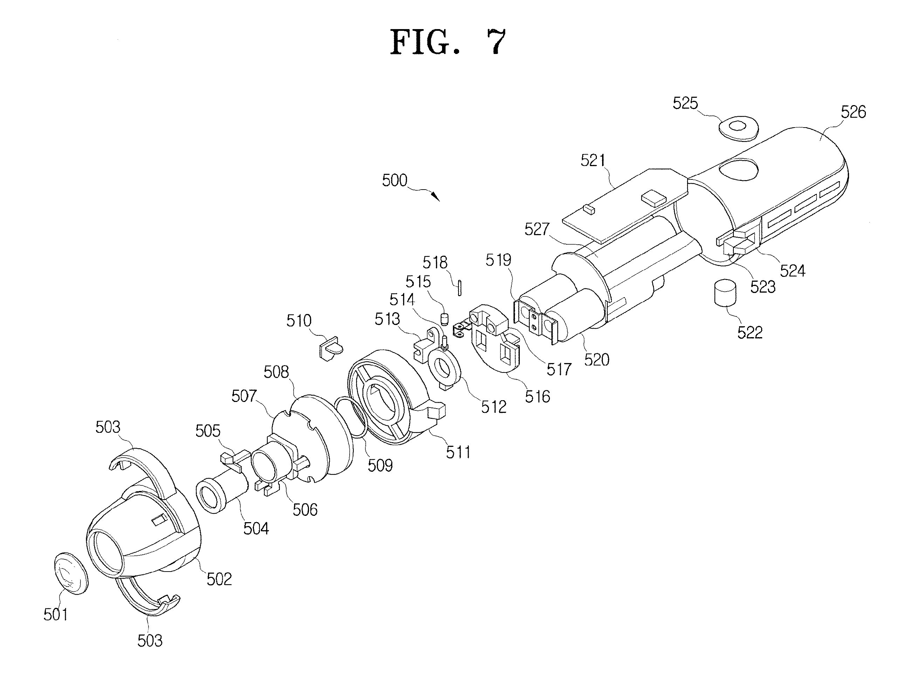

FIG. 7 is an exploded perspective view of a first external camera 500 according to an exemplary embodiment of the present invention.

Referring to FIG. 7, the first external camera 500 may include a front cover 502, a middle cover 511 and a casing 526.

A lens window 501 is coupled to the front side of the front cover 502, and a cover ring 503 is provided on the front cover 502. The front cover 502 houses therein a lens 504, a lens holder 506 and a fixation member 505 to fix the lens 504, and a first printed circuit board (PCB) 507 having a photographing element and other various circuit equipment. A rotational support 508 is provided such that the front cover 502 and the internal components of the front cover 502 are rotatable with respect to the middle cover 511, and an O-ring 509 is interposed between the rotational support 508 and the middle cover 511.

The casing 526 includes a power button 525, and further includes a holder 523, a fixing shaft 524 and a bolt 522 to fix the first external camera 500 to a tripod. The casing 526 houses therein a battery 520, a battery holder 527 to mount the battery 520, a second printed circuit board (PCB) 521 which includes other various circuit equipment including a transmitting circuit. Additionally, a battery seat 519, a seat holder 516, a holder click cap 517, a hinge button 518, a click spring 515, a click grab 514, a cap holder 513 and a washer 512 are provided and operated according to manipulation of the power button 525. The battery grab 510 fixes the middle cover 511 to the casing 526.

The camera part 120 of FIG. 3 is housed in the front cover 502, and the wireless transmitting part 140 is housed in the casing 526 such that the integrated first external camera 100, 500 can be provided.

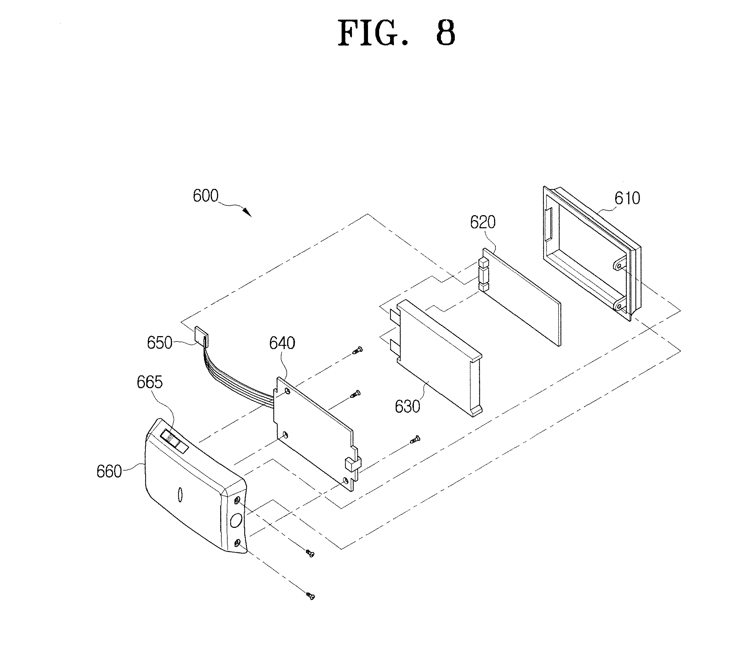

FIG. 8 is an exploded perspective view of a wireless receiver of a photographing apparatus according to an exemplary embodiment of the present invention.

Referring to FIG. 8, the wireless receiver 600 includes a PCM circuit part 620 between the first and second covers 610, 660, a battery part 630 and a receiver 640.

The second cover 660 includes a slide type power key 665. The battery part 630 is coupled to the PCM circuit part 620, and the receiver 640 is coupled to the PCM circuit part 620 by the 5-pin connector 650. Accordingly, the power of the battery part 630 is stabilized at the PCM circuit part 620, and the video and audio signal being received at the receiving part 640, are transmitted to the PCM circuit part 620.

As explained above, according to exemplary embodiments of the present invention, the user is enabled to select between a wired camera and a wireless camera being connected with the photographing apparatus as necessary, and therefore, enjoy photographing in various environments with convenience.

The present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While certain exemplary embodiments of the present invention have been shown and described with reference to certain preferred embodiments thereof, it will be understood by those skilled in the art that various changes in the form and details may be made therein without departing from the spirit and scope of the invention as defined by the appended claims and their equivalents.

## Claims

1. A photographing apparatus, comprising:
a photographing part for photographing an optical image being converged through a lens part, and converting the image into an electric signal; a video signal generating part for processing the electric signal being output from the photographing part and generating a video signal;
a signal processing part for processing the video signal to a displayable form;
a wireless receiver for receiving a video signal being wirelessly transmitted from a first external camera, and transmitting the received signal to the signal processing part; and
a wired connecting part connected with a second external camera in a wired manner, and transmitting the video signal to the signal processor.

2. The photographing apparatus of claim 1, further comprising a control part for controlling such that, in a communication with both of the first and the second external cameras, the signal processing part receives the video signal being received from the first external camera and processes the received signal.

3. The photographing apparatus of claim 2, further comprising a selecting part for selecting one from an audio signal being received from the first external camera, and an audio signal being received from the second external camera, wherein
the control part controls such that the selecting part first selects the audio signal being received from the first external camera.

4. A photographing apparatus, comprising:
a main body for receiving a video signal and an audio signal being received from a second external camera in a wired manner, and processing the received signals; and
a wireless receiver for receiving a video signal and an audio signal being wirelessly received from a first external camera and transmitting the received signal to the main body.

5. The photographing apparatus of claim 4, wherein the wireless receiver comprises:
a battery part for mounting a battery;
a circuit part for stabilizing power being supplied from the battery part and supplying the stabilized power to the main body; and
a receiver for receiving a video signal and an audio signal from the first external camera, if power is supplied from the main body.

6. The photographing apparatus of claim 5, wherein the wireless receiver further comprises a power key for turning on the wireless receiver, and if the wireless receiver is turned on according to the power key, power is supplied from the main body.

7. The photographing apparatus of claim 5, wherein the wireless receiver further comprises a second channel switch for being manipulated in the same manner as a first channel switch of the first external camera for operating a transmission channel of the first external camera.

8. The photographing apparatus of claim 4, wherein the main body comprises:
a wired connecting part, to which a cable being connected with the second external camera, is connected;
a signal processing part for processing the video and audio signals being received via the wired connecting part and the wireless receiver; and
a control part for controlling such that the signal processing part processes the video signal and the audio signal being received via the wireless receiver, among the video and the audio signals being received via the wired connecting part and the wireless receiver.

9. The photographing apparatus of claim 8, wherein the main body further comprises a selecting part for selecting one from the audio signals being received via the wired connecting part and the wireless receiver, and
the control part controls such that the selecting part selects the audio signal being received via the wireless receiver.

10. The photographing apparatus of claim 4, further comprising:
a photographing part for photographing an optical image being converged through a lens part and converting the video into an electric signal;
a video signal generating part for processing the electric signal being output from the photographing part and generating a video signal; and
a display part for displaying the video signal being processed at the signal processor.

11. A method of switching a mode of a photographing apparatus, comprising:
upon power on, operating in one of a photographing mode and a playback mode;
determining an interrupt from an external camera; and
upon determination of the interrupt, terminating the photographing mode and the playback mode and switching into a reception mode for receiving a video signal from the external camera.

12. The method of claim 11, wherein the switching into the reception mode comprises, upon determination that the interrupt is generated from a wired external camera which is communicating in a wired manner, switching into a wired reception mode for receiving a video signal from the wired external camera.

13. The method of claim 11, wherein the switching into the reception mode comprises, upon determination that the interrupt is generated from a wireless external camera which is wireless communicating, switching into a wireless reception mode for receiving a video signal from the wireless external camera.

14. The method of claim 11, wherein the switching into the reception mode comprises, upon determination that the interrupt is generated from both of a wired external camera which is communicating in a wired manner, and a wireless external camera which is communicating wirelessly, switching into a wireless reception mode for receiving a video signal from the wireless external camera.

15. A computer readable medium of instructions for controlling a photographing apparatus, comprising:
a first set of instructions for controlling the photographing apparatus, upon power on, to operate in one of a photographing mode and a playback mode;
a second set of instructions for controlling the photographing apparatus to determine an interrupt from an external camera; and
a third set of instructions for controlling the photographing apparatus, upon determination of the interrupt, to terminate the photographing mode and the playback mode and to switch into a reception mode for receiving a video signal from the external camera.

16. The computer readable medium of instructions of claim 15, wherein the third set of instructions for controlling the photographing apparatus to switch into the reception mode comprises instructions for controlling the photographing apparatus , upon determination that the interrupt is generated from a wired external camera which is communicating in a wired manner, instructions for controlling the photographing apparatus to switch into a wired reception mode for receiving a video signal from the wired external camera.

17. The computer readable medium of instructions of claim 15, wherein the third set of instructions for controlling the photographing apparatus to switch into the reception mode comprises, upon determination that the interrupt is generated from a wireless external camera which is wireless communicating, controlling the photographing apparatus to switch into a wireless reception mode for receiving a video signal from the wireless external camera.

18. The computer readable medium of instructions of claim 15, wherein the third set of instructions for controlling the photographing apparatus to switch into the reception mode comprises, upon determination that the interrupt is generated from both of a wired external camera which is communicating in a wired manner, and a wireless external camera which is communicating wirelessly, controlling the photographing apparatus to switch into a wireless reception mode for receiving a video signal from the wireless external camera.
